# FASCICULE DE BREVET EUROPEEN

(11) **EP 3 701 133 B1**
(45) Date de publication et mention de la délivrance du brevet: **14.07.2021**
(21) Numéro de dépôt: 18800696.9
(22) Date de dépôt: 21.09.2018
(51) Int. Cl.: F01N 3/021, F01N 3/023, F01N 9/00, F01N 11/00, F02D 41/00, F02D 41/02, F02D 41/12, F02D 41/14

(54) **PROCÉDÉ D'ESTIMATON D'UN CHARGEMENT EN SUIES D'UN FILTRE À PARTICULES DE MOTEUR THERMIQUE**
BERECHNUNGSVERFAHREN ZUR SCHÄTZUNG DER RUSSBELADUNG EINES PARTIKELFILTERS EINES VERBRENNUNGSMOTORS
METHOD FOR ESTAMATING THE SOOT LOADING OF A PARTICULATE FILTER OF AN INTERNAL COMBUSTION ENGINE

(30) Priorité: 23.10.2017 FR 1759965
(43) Date de publication de la demande: 02.09.2020
(73) Titulaire: PSA Automobiles SA, 78300 Poissy (FR)
(72) Inventeur: FURIO VIZCAINO, Javier, 94300 Vincennes (FR); KARAGEORGIOU, Dimitrios, 92500 Rueil Malmaison (FR); GOGO, Matthieu, 92800 Puteaux (FR)
(86) Numéro de dépôt international: PCT/FR2018/052299
(87) Numéro de publication internationale: WO 2019/081826

(56) Documents cités:
- US-A1- 2013 145 822
- US-A1- 2013 269 323
- US-A1- 2016 131 012

## Description

L'invention porte sur un procédé d'estimation d'un chargement en suies d'un filtre à particules de moteur thermique. L'invention se situe dans le domaine de la dépollution des gaz d'échappement d'un moteur thermique, notamment de véhicule automobile.

Lors de la combustion d'un mélange d'air et de carburant dans un moteur thermique, des polluants peuvent être émis dans la ligne d'échappement du moteur. Ces polluants sont principalement des hydrocarbures imbrûlés (HC), des oxydes d'azote (monoxyde d'azote NO et dioxyde d'azote NO₂) et des oxydes de carbone (dont le monoxyde de carbone CO).

Les normes environnementales en matière de dépollution des gaz d'échappement imposent l'installation de systèmes de post-traitement des gaz d'échappement dans la ligne d'échappement des moteurs. La ligne d'échappement d'un moteur est donc généralement au moins munie d'un catalyseur, par exemple un catalyseur à trois voies, permettant la réduction des oxydes d'azote en azote et en dioxyde de carbone, l'oxydation des monoxydes de carbone en dioxyde de carbone, et l'oxydation des hydrocarbures imbrûlés en dioxyde de carbone et en eau.

Des particules solides ou liquides constituées essentiellement de suies à base de carbone peuvent également être émises. Pour les piéger, on prévoit généralement un filtre à particules constitué d'une matrice minérale, de type céramique, de structure alvéolaire, définissant des canaux disposés sensiblement parallèlement à la direction générale d'écoulement des gaz d'échappement dans le filtre, et alternativement obturés du côté de la face d'entrée des gaz du filtre et du côté de la face de sortie des gaz du filtre, comme cela est décrit dans le document EP2426326.

Le filtre à particules nécessite des régénérations régulières pour ne pas être surchargé. Ces régénérations ont lieu en présence de thermique et d'oxygène. Pour un moteur à essence, une zone importante de fonctionnement moteur permet d'apporter la thermique nécessaire et l'oxygène peut être apporté par des coupures d'injection lors de relâchements de la pédale d'accélération ou lors des passages de rapport.

Toutefois, il peut exister des situations pour lesquelles les conditions de régénération du filtre ne sont pas réunies, soit du fait d'un profil de roulage trop basse vitesse ne permettant pas d'atteindre la thermique nécessaire à la régénération du filtre à particules, soit du fait de la multiplicité de roulages courts, générant des émissions de particules supérieures à la capacité de régénération du filtre à particules (dans le temps durant lequel les conditions sont réunies).

Les profils de roulage de tels conducteurs peuvent générer, du fait d'une mauvaise estimation de la quantité de suies stockée par le filtre à particules, de fausses détections d'une défaillance du filtre à particules, notamment un colmatage. On rappelle que le colmatage du filtre à particules correspond à un seuil d'encrassement tel qu'il n'est pas possible d'utiliser le filtre à particules sans risquer sa détérioration en cas de combustion non maîtrisée des suies. Une fausse détection d'un colmatage du filtre à particules engendre des opérations de maintenance coûteuses pour le conducteur, dans la mesure où elle impose la réalisation d'une régénération du filtre à l'aide d'outils dédiés voire un changement de la ligne d'échappement du véhicule automobile. Des procédé d'estimation d'un chargement en suies d'un filtre à particules de moteur thermique sont décrit dans les publications suivantes: US 2013/269323 A1, US 2016/131012 A1 ou US 2013/145822 A1.

L'invention vise à remédier efficacement à cet inconvénient en proposant un procédé d'estimation d'un chargement en suies d'un filtre à particules de moteur thermique relié à une ligne d'échappement, comportant toutes les caractéristiques de la revendication 1.

L'invention permet ainsi, grâce à l'adaptation de la stratégie d'estimation du chargement en suies en fonction du débit des gaz d'échappement, de détecter de façon robuste l'état de colmatage du filtre à particules et donc de diminuer le taux de fausses détections. Cela se traduit par un gain en qualité vis-à-vis du conducteur, ainsi que par une réduction des coûts associés aux opérations de maintenance.

Selon l'invention, dans le cas où le débit des gaz d'échappement est inférieur à un seuil minimum calibrable, ledit procédé comporte une étape de sélection d'une stratégie d'estimation du chargement en suies du filtre à particules basée sur un estimateur en boucle ouverte d'émission de particules en sortie du moteur thermique.

Selon l'invention, dans le cas où le débit des gaz d'échappement est compris entre un seuil minimum calibrable et un seuil maximum calibrable, ledit procédé comporte une étape de sélection d'une stratégie d'estimation du chargement en suies du filtre à particules basée sur un estimateur en boucle ouverte d'émission de particules en sortie du moteur thermique, une valeur de chargement en suies retournée par ledit estimateur étant mise à jour par une valeur de chargement en suies estimée à partir d'une mesure d'une différence de pression aux bornes du filtre à particules.

Selon l'invention, dans le cas où le débit des gaz d'échappement est supérieur à un seuil maximum calibrable, ledit procédé comporte une étape de sélection d'une stratégie d'estimation du chargement en suies du filtre à particules basée sur un estimateur en boucle ouverte saturé lorsque ledit estimateur retourne une valeur proche d'un seuil de chargement critique correspondant notamment à une surcharge ou à un colmatage du filtre à particules, un dépassement d'un seuil de chargement critique étant détecté lorsqu'une différence de pression aux bornes du filtre à particules dépasse une valeur seuil correspondant à ce seuil de chargement critique.

Selon une mise en oeuvre, la valeur seuil correspondant au seuil de chargement critique est non linéaire en fonction du débit des gaz d'échappement.

Selon une mise en oeuvre, l'estimateur des émissions des particules en sortie du moteur thermique est basé sur l'utilisation d'une cartographie fournissant un niveau d'émission de base de particules en fonction d'un point de fonctionnement, ledit niveau d'émission de base de particules étant corrigé par un facteur de correction.

Selon une mise en œuvre, le facteur de correction dépend d'au moins un paramètre parmi: une température de liquide de refroidissement, une température d'admission du moteur thermique, et une température extérieure.

L'invention a également pour objet un calculateur moteur comportant une mémoire stockant des instructions logicielles pour la mise en oeuvre du procédé d'estimation d'un chargement en suies d'un filtre à particules de moteur thermique tel que précédemment défini selon l'une quelconque des revendications précédentes.

L'invention concerne en outre un moteur thermique, notamment pour véhicule automobile, comportant un calculateur moteur tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique d'un moteur thermique avec lequel est mis en oeuvre le procédé d'estimation d'un chargement en suies d'un filtre à particules de moteur thermique selon la présente invention;
La figure 2 est une représentation graphique illustrant les plages de débit volumique des gaz d'échappement traversant le filtre à particules correspondant aux différentes stratégies d'estimation de chargement en suies selon l'invention ;
Les figures 3a à 3c montrent des représentations graphiques de l'évolution, en fonction du temps, du débit des gaz d'échappement, du chargement réel en suies, et du chargement estimé en suies correspondant pour les différentes stratégies mises en oeuvre dans le procédé selon l'invention.

Les éléments identiques, similaires, ou analogues conservent la même référence d'une figure à l'autre.

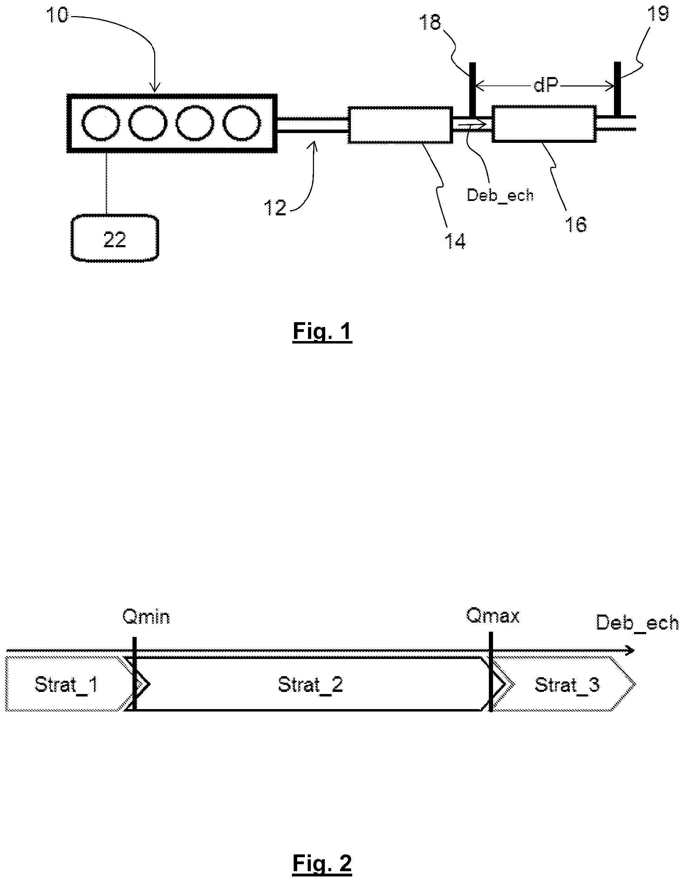

La figure 1 représente un moteur thermique 10, par exemple un moteur à essence, notamment destiné à équiper un véhicule automobile. Le moteur thermique 10 est relié à une ligne d'échappement 12 pour l'évacuation des gaz brûlés produits par le fonctionnement du moteur thermique 10.

La ligne d'échappement 12 comprend un organe 14 de dépollution de polluant gazeux, par exemple un catalyseur d'oxydation, ou un catalyseur trois-voies. Le catalyseur trois voies 14 permet notamment de réduire les oxydes d'azote en azote et en dioxyde de carbone, d'oxyder les monoxydes de carbone en dioxyde de carbone, et les hydrocarbures imbrûlés en dioxyde de carbone et en eau.

En outre, un filtre à particules 16 permet de filtrer des particules de suies dans les gaz d'échappement du moteur thermique 10. Le filtre à particules 16 est adapté à la filtration de particules de suies provenant de la combustion d'essence. Ce filtre 16 est appelé en anglais "Gasoline Particulate Filter" abrégé en GPF.

Dans le filtre à particules 16, les gaz d'échappement traversent la matière composant le filtre à particules 16. Ainsi, lorsque le filtre à particules 16 est formé de canaux, chacun de ces canaux comprend une extrémité bouchée, de sorte que les gaz d'échappement s'écoulant dans le filtre à particules 16 passent de canaux en canaux, en traversant les parois des différents canaux pour sortir du filtre à particules 16. Le filtre à particules 16 pourra être à base d'une matrice céramique poreuse, par exemple en cordiérite, mullite, titanate d'aluminium ou carbure de silicium. S'il y a lieu, l'organe de dépollution 14 et le filtre à particules 16 pourront être implantés à l'intérieur d'une même enveloppe.

La ligne d'échappement 12 est également munie de deux capteurs 18, 19 de mesure de pression. Un des capteurs 18 est disposé en amont du filtre à particules 16 et l'autre capteur 19 est disposé en aval du filtre à particules 16. Les capteurs 18, 19 de mesure de pression permettent de mesurer une différence de pression entre l'entrée et la sortie du filtre à particules 16, dite différence de pression dP aux bornes du filtre à particules, à partir de laquelle il est possible, dans certaines conditions de fonctionnement du moteur thermique, de déduire une quantité de particules accumulées, c'est-à-dire un chargement en suies du filtre à particules 16, comme cela est expliqué plus en détails ci-après.

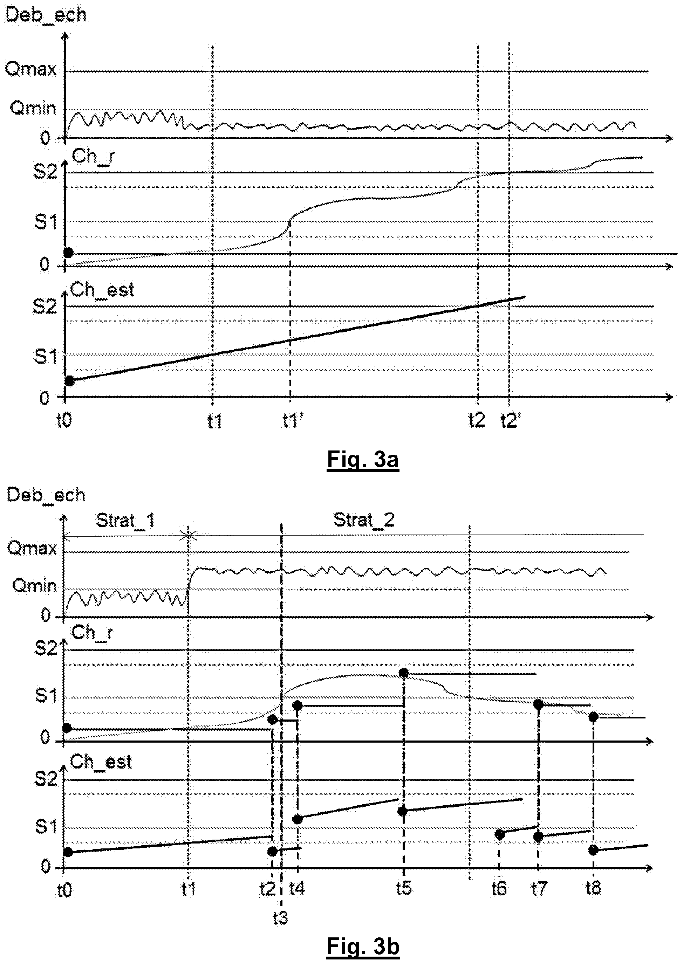

Un calculateur 22 est également prévu pour assurer le pilotage du fonctionnement du moteur thermique 10. Ce calculateur 22 comprend une mémoire stockant des instructions logicielles pour la mise en œuvre du procédé d'estimation d'un chargement en suies du filtre à particules 16 selon l'invention décrit ci-après en référence avec les figures 2 et 3a à 3c.

Ce procédé est basé sur la sélection d'une stratégie d'estimation du chargement en suies du filtre à particules 16 en fonction du débit volumique des gaz d'échappement Deb_ech mesuré ou estimé par le calculateur moteur 22. Le débit volumique des gaz Deb_ech est avantageusement estimé à partir d'une mesure du débit massique effectuée par un capteur implantée dans la ligne d'échappement 12, une température en amont du filtre à particules 16, ainsi qu'une pression absolue en amont du filtre à particules 16.

Pour des profils de conduite urbains critiques suivant lesquels un débit des gaz d'échappement Deb_ech est faible, c'est-à-dire inférieur à un débit minimum calibrable Qmin par exemple de l'ordre de 0.02m³/s (on entend par "de l'ordre de" une variation de plus ou moins 15% autour de cette valeur), la mesure de la différence de pression dP aux bornes du filtre 16 n'est pas robuste et n'est donc pas exploitée par le calculateur moteur pour déterminer le chargement en suies. Dans ce cas, la stratégie Strat_1 est mise en oeuvre. Suivant cette stratégie Strat_1, un estimateur en boucle ouverte estime le chargement à partir de l'estimation des particules en sortie du moteur en considérant l'hypothèse que toutes les suies sont stockées dans le filtre à particules 16.

Plus précisément, cet estimateur est basé sur l'utilisation d'une cartographie fournissant un niveau d'émission de base en fonction d'un point de fonctionnement du moteur thermique défini par un régime et une charge du moteur thermique. Le niveau d'émission de base est corrigé par un facteur de correction. Le facteur de correction dépend d'au moins un paramètre parmi: une température de liquide de refroidissement, une température d'admission du moteur thermique 10, et une température extérieure. Ces informations proviennent du calculateur moteur.

La figure 3a montre des représentations graphiques de l'évolution, en fonction du temps, du débit des gaz d'échappement Deb_ch, du chargement réel en suies Ch_r, et du chargement estimé en suies Ch_est lors de la mise en oeuvre de la stratégie Strat_1.

Ainsi, le débit des gaz d'échappement Deb_ech étant inférieur à Qmin, l'estimateur en boucle ouverte est activé à l'instant t0. On remarque qu'il existe un léger écart entre le chargement en suies réel Ch_r et le chargement en suie estimé Ch_est. Ainsi, le dépassement du seuil de surcharge S1 est détecté par le calculateur moteur à l'instant t1 alors que ce dépassement se produit en réalité à l'instant t1'. Le dépassement du seuil de colmatage S2 supérieur au seuil S1 est détecté à l'instant t2 alors que ce dépassement se produit en réalité à l'instant t2'. Les seuils de surcharge S1 et de colmatage S2 sont respectivement fixés à 5g et 15g de suies dans le filtre à particules 16.

Pour des profils urbains roulants suivant lesquels le débit des gaz d'échappement Deb_ech est compris entre le débit minimum calibrable Qmin et un débit maximum calibrable Qmax par exemple de l'ordre de 0.08m³/s (on entend par "de l'ordre de" une variation de plus ou moins 15% autour de cette valeur), une stratégie Strat_2 est mise en oeuvre. Suivant cette stratégie Strat_2, l'estimateur en boucle ouverte continue à estimer le chargement du filtre 16. La valeur retournée par l'estimateur est toutefois mise à jour régulièrement par une valeur de chargement en suies estimée à partir d'une mesure d'une différence de pression dP aux bornes du filtre à particules 16.

Les conditions de mise à jour de l'estimateur dépendent du profil de conduite. Ainsi, pour un profil dynamique, la mise à jour est longue du fait du filtrage de mesures aberrantes; tandis que pour un profil stabilisé la mise à jour est relativement plus rapide.

Cette stratégie Strat_2 est restreinte à une fenêtre de débit volumique des gaz d'échappement restreinte entre les valeurs Qmin et Qmax dans laquelle la relation entre la contrepression et le débit volumique des gaz est linéaire. En dehors de cette fenêtre, la mise à jour n'est pas robuste car il n'existe plus de relation linéaire entre ces deux paramètres.

La figure 3b montre des représentations graphiques de l'évolution, en fonction du temps, du débit des gaz d'échappement Deb_ch, du chargement réel en suies Ch_r, et du chargement estimé en suies Ch_est suite à l'activation de la stratégie Strat_2.

Plus précisément, le débit des gaz d'échappement Deb_ech étant inférieur à Qmin entre les instants t0 et t1, l'estimateur en boucle ouverte est activé suivant la stratégie Strat_1. Lorsque, à partir de l'instant t1, le débit des gaz d'échappement Deb_ech est compris entre Qmin et Qmax, l'estimateur en boucle ouverte reste activé et il est mis à jour régulièrement suivant la stratégie Strat_2 aux instants t2, t4, t5, t6, t7, t8 par la corrélation entre la différence de pression dP aux bornes du filtre à particules 16 et un chargement en suies correspondant.

Pour des profils de roulage autoroutier suivant lesquels le débit des gaz d'échappement Deb_ech est supérieur au débit maximum Qmax, une stratégie Strat_3 est mise en oeuvre. Cette stratégie Strat_3 est basée sur une comparaison de la différence de pression dP aux bornes du filtre 16 mesurée et un seuil de contrepression qui n'est pas linéaire en fonction du débit volumique des gaz.

Plus précisément, l'estimateur en boucle ouverte continue à estimer le chargement et est saturé lorsqu'il retourne une valeur proche d'un seuil de chargement critique. On définit par exemple le seuil de chargement critique S1 pour la surcharge, et le seuil de chargement critique S2 pour le colmatage. On considère qu'une valeur estimée de chargement est proche d'un seuil de chargement critique S1, S2 lorsqu'elle atteint un seuil S1-X, S2-Y compris entre 70% et 95% de cette valeur seuil S1, S2.

Le dépassement du seuil de chargement critique S1, S2 est détecté lorsqu'une différence de pression dP aux bornes du filtre 16 dépasse une valeur seuil correspondant au seuil de chargement critique S1, S2. Cette valeur seuil est non linéaire en fonction du débit volumique des gaz d'échappement.

De cette façon, pour des conditions de débits importants des gaz d'échappement, la boucle ouverte ne peut pas détecter une surcharge ou un colmatage du filtre 16 tant que la stratégie Strat_3 ne l'a pas détecté via une mesure de différence de pression dP aux bornes du filtre à particules 16.

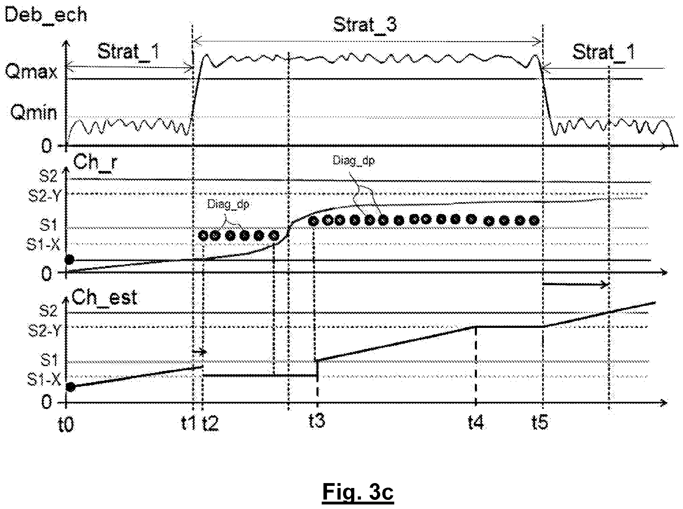

La figure 3c montre des représentations graphiques de l'évolution, en fonction du temps, du débit des gaz d'échappement Deb_ch, du chargement réel en suies Ch_r, et du chargement estimé en suies Ch_est suite à l'activation de la stratégie Strat_3.

Plus précisément, le débit des gaz d'échappement Deb_ech étant inférieur à Qmin entre les instants t0 et t1, l'estimateur en boucle ouverte est activé suivant la stratégie Strat_1.

Lorsqu'à partir de l'instant t1, le débit des gaz d'échappement Deb_ech dépasse la valeur Qmax, la stratégie Strat_3 est activée de sorte que le chargement estimé Ch_est est saturé à l'instant t2 car l'estimateur a retourné une valeur de chargement en suies Ch_est atteignant S1-X mais les valeurs de différence de pression dP aux bornes du filtre à particules 16 correspondent à des chargements en suies Diag_dp inférieurs au seuil critique de surcharge S1.

Le chargement estimé Ch_est est saturé jusqu'à l'instant t3 à partir duquel les valeurs de différence de pression dP aux bornes du filtre à particules 16 correspondent à des chargements en suies Diag_dp supérieurs au seuil critique de surcharge S1.

L'estimateur en boucle ouverte est alors réactivée jusqu'à l'instant t4 où il est de nouveau saturé, car l'estimateur a retourné une valeur de chargement en suies Ch_est atteignant S2-X mais les valeurs de différence de pression dP aux bornes du filtre à particules 16 correspondent à des chargements en suies Diag_dp inférieurs au seuil critique de colmatage S2.

A l'instant t5, l'estimateur en boucle ouverte est réactivé suivant la stratégie Strat_1 car le débit des gaz d'échappement Deb_ech devient inférieur à Qmin.

## Revendications

1. Procédé d'estimation d'un chargement en suies d'un filtre à particules (16) de moteur thermique (10) relié à une ligne d'échappement (12), comportant :
- une étape de mesure ou d'estimation d'un débit des gaz d'échappement (Deb_ech), et
- une étape de sélection d'une stratégie d'estimation (Strat_1, Strat_2, Strat_3) du chargement en suies du filtre à particules (16) en fonction du débit des gaz d'échappement (Deb_ech) mesuré ou estimé, comportant en outre:
• dans le cas où le débit des gaz d'échappement (Deb_ech) est inférieur à un seuil minimum calibrable (Qmin), ledit procédé comporte une étape de sélection d'une stratégie d'estimation (Strat_1) du chargement en suies du filtre à particules (16) basée sur un estimateur en boucle ouverte d'émission de particules en sortie du moteur thermique (10), le procédé d'estimation **caractérisé en ce que**
• dans le cas où le débit des gaz d'échappement (Deb_ech) est compris entre un seuil minimum calibrable (Qmin) et un seuil maximum calibrable (Qmax), ledit procédé comporte une étape de sélection d'une stratégie d'estimation (Strat_2) du chargement en suies du filtre à particules (16) basée sur un estimateur en boucle ouverte d'émission de particules en sortie du moteur thermique (10), une valeur de chargement en suies retournée par ledit estimateur étant mise à jour par une valeur de chargement en suies estimée à partir d'une mesure d'une différence de pression (dP) aux bornes du filtre à particules (16) ; ou
• dans le cas où le débit des gaz d'échappement (Deb_ech) est supérieur à un seuil maximum calibrable (Qmax), ledit procédé comporte une étape de sélection d'une stratégie d'estimation (Strat_3) du chargement en suies du filtre à particules (16) basée sur un estimateur en boucle ouverte saturé lorsque ledit estimateur retourne une valeur proche d'un seuil de chargement critique (S1, S2) correspondant notamment à une surcharge ou à un colmatage du filtre à particules (16), un dépassement d'un seuil de chargement critique (S1, S2) étant détecté lorsqu'une différence de pression (dP) aux bornes du filtre à particules (16) dépasse une valeur seuil correspondant à ce seuil de chargement critique (S1, S2).

2. Procédé selon la revendication 1, **caractérisé en ce que** la valeur seuil correspondant au seuil de chargement critique (S1, S2) est non linéaire en fonction du débit des gaz d'échappement (Deb_ech).

3. Procédé selon l'une quelconque des revendications précédentes, **caractérisé en ce que** l'estimateur des émissions des particules en sortie du moteur thermique (10) est basé sur l'utilisation d'une cartographie fournissant un niveau d'émission de base de particules en fonction d'un point de fonctionnement, ledit niveau d'émission de base de particules étant corrigé par un facteur de correction.

4. Procédé selon la revendication 3, **caractérisé en ce que** le facteur de correction dépend d'au moins un paramètre parmi: une température de liquide de refroidissement, une température d'admission du moteur thermique (10), et une température extérieure.

5. Calculateur moteur comportant une mémoire stockant des instructions logicielles pour la mise en oeuvre du procédé d'estimation d'un chargement en suies d'un filtre à particules (16) de moteur thermique (10) tel que défini selon l'une quelconque des revendications précédentes.

6. Moteur thermique (10), notamment pour véhicule automobile, comportant un calculateur moteur (22) tel que défini selon la revendication 5.

## Patentansprüche

1. Verfahren zum schätzen, eine Rußbeladung eines Partikelfilters (16) einer Wärmekraftmaschine (10), die mit einer Abgasleitung (12) verbunden ist, umfassend :
- ein Schritt zum Messen oder Schätzen einer Abgasströmungsrate (Deb_ech), und
- ein Schritt der Auswahl eine Strategie zur Schätzung (Strat _1, Strat_2, Strat_3) der Rußbeladung des Partikelfilters (16) in Abhängigkeit von der Strömungsrate des Abgases (Deb_ech) gemessen oder geschätzt, das ferner umfasst:
• in dem Fall, in dem die Strömungsrate des Abgases (Deb_ech) ist kleiner als ein minimaler Schwellenwert kalibriert (Qmin), wobei das Verfahren einen Schritt der Auswahl einer umfasst Strategie
zur Schätzung (Strat_1) Last ment Ruß Filter mit Partikeln (16) auf Basis von ein Open-Loop- Schätzer der Partikelemission am Ausgang der Wärmekraftmaschine (10), wobei das Schätzverfahren **dadurch gekennzeichnet ist, dass** :
• in dem Fall, in dem die Strömungsgeschwindigkeit der Abgase (Deb_ech) dazwischen ist eine kalibrierbarer Minimalschwelle (Qmin) und eine kalibrierbaren Maximalschwelle (Qmax), die umfasst Bearbeiten Verfahren einen Schritt eine Auswählen Schätzstrategie (Strat_ 2) der Rußbeladung des Partikelfilters (16) basierend auf einem offenen Schleife Schätzer der Partikelemission von der Wärmekraftmaschine (10), wobei ein von dem Schätzer zurückgegebener Rußbeladungswert durch einen aus einer Druckmessung geschätzten Rußbeladungswert aktualisiert wird Differenz (dP) über dem Partikelfilter (16) ; oder
• in dem Fall, in dem die Strömungsgeschwindigkeit der Abgase (Deb_ech) größer ist als ein kalibrierbarer maximaler Schwellenwert (Qmax), wobei das Verfahren einen Schritt des Auswählens eines umfasst zum Abschätzen Strategie (Strat_3) der Rußbeladung des Filterpartikels (16) basierend auf einer offene Schleife Schätzer gesättigt, wenn der Schätzer einen Wert zurückgibt die Nähe zu einer Schwellenbelastung kritisch (S1, S2) entspricht, insbesondere auf eine Überlast oder ein Verstopfen der Filterpartikel (16), eine Überschreitung eines kritischen Belastungs Der Schwellenwert (S1, S2) wird erfasst, wenn eine Druckdifferenz (dP) an den Anschlüssen des Partikelfilters (16) einen Schwellenwert überschreitet, der diesem kritischen Belastungsschwellenwert (S1, S2) entspricht.

2. Verfahren nach Anspruch 1, **dadurch gekennzeichnet, dass** der Schwellenwert auf die kritische Belastungsschwelle entspricht (S1, S2) nicht linear ist als Funktion der Strömungsgeschwindigkeit der Abgase (Deb_ech).

3. Verfahren nach einem der vorhergehenden Ansprüchen, **dadurch gekennzeichnet, daß** der Stimulator der Emissionen der Teilchen am Ausgang des Verbrennungsmotors (10) auf der Verwendung einer Karte beruht ein Basisniveau des Vorsehen Emission von Partikeln Als Funktion von einem Betriebspunkt, der Basispartikelemissionspegel von einem korrigiert wird Korrekturfaktor.

4. Verfahren nach Anspruch 3, **dadurch gekennzeichnet,**
**dass** der Korrekturfaktor abhängig von mindestens einem Parameter aus :
ein Temperaturkühlmittel, eine Eintrittstemperatur der Wärmekraftmaschine (10), und eine Außentemperatur.

5. Motorcomputer, der einen Speicher zum Speichern von Softwareanweisungen zum Implementieren des Verfahrens zum Schätzen einer Rußbeladung eines Partikelfilters (16) einer Wärmekraftmaschine (10) umfasst, wie gemäß einem der folgenden früheren Ansprüche definiert.

6. Wärmekraftmaschine (10), insbesondere für ein Kraftfahrzeug, umfassend einen Motorcomputer (22) gemäß Anspruch 5.

## Claims

1. Method for estimating a soot load of a particulate filter (16) of a heat engine (10) connected to an exhaust line (12), comprising :
- a step of measuring or estimating an exhaust gas flow rate (Deb_ech), and
- a step of selecting a strategy to estimate (Strat _1, Strat_2, Strat_3) loading soots of the particulate filter (16) depending on the flow rate of exhaust gas (Deb_ech) measured or estimated, further comprising :
• in the case where the flow rate of exhaust gas (Deb_ech) is less than a minimum threshold calibrated (Qmin), said method includes a step of selecting a strategy for estimating (Strat_1) load ment soot filter with particles (16) based on an open-loop estimator of emission of particles at the output of the heat engine (10), the estimation method **characterized in that**:
• in the case where the flow rate of the exhaust gases (Deb_ech) is between a calibratable minimum threshold (Qmin) and
a calibratable maximum threshold (Qmax), said method comprises a step of selecting an estimation strategy (Strat_2) of the soot loading of the particulate filter (16) based on an open loop estimator of particle emission from the heat engine (10), a load value soot returned by said estimator being set an update by a value of soot loading estimated from a measurement of a pressure difference (dP) to the terminals of the particulate filter (16) ; or
• in the case where the flow rate of the exhaust gases (Deb_ech) is greater than a calibratable maximum threshold (Qmax), said method comprises a step of selecting a strategy for estimating (Strat_3) of the soot loading of the filter particles (16) based on an estimator open loop saturated when said estimator returns a value close to a threshold loading critical (S1, S2) corresponding in particular to an overload or a clogging of the filter particles (16), an exceeding of a critical loading threshold (S1, S2) being detected when a pressure difference (dP) at the terminals of the particulate filter (16) exceeds a threshold value corresponding to this critical loading threshold (S1, S2).

2. Method according to claim 1, **characterized in that**
the threshold value corresponding to the critical loading threshold (S1, S2) is nonlinear as a function of the flow rate of the exhaust gases (Deb_ech).

3. Method according to any one of the preceding claims, **characterized in that** the stimulator of the emissions of the particles at the output of the heat engine (10) is based on the use of a map providing a base level of emission of particles as a function of an operating poin, said base particle emission level being corrected by a correction factor.

4. A method according to claim 3, **characterized in that** the correction factor depends on at least one parameter from : a temperature coolant, an inlet temperature of the heat engine (10), and an outdoor temperature.

5. Engine computer comprising a memory storing software instructions for implementing the method of estimating a soot loading of a particulate filter (16) of a heat engine (10) as defined according to any one of the following previous claims.

6. Heat engine (10), in particular for a motor vehicle, comprising an engine computer (22) as defined in claim 5.
